# EUROPEAN PATENT APPLICATION

(11) **EP 1 510 241 A1**
(43) Date of publication of application: **02.03.2005**
(21) Application number: 03733242.6
(22) Date of filing: 02.06.2003
(51) Int. Cl.: B01D 39/14, B01D 46/52, D04H 1/58, D06M 10/02

(54) **ELECTRET FILTER AND PROCESS FOR PRODUCING THE SAME**

(30) Priority: 06.06.2002 JP 2002165934; 06.06.2002 JP 2002165935
(71) Applicant: Toyo Boseki Kabushiki Kaisha, Osaka-shi, Osaka 530-8230 (JP)
(72) Inventor: TOKUDA, Shoji, Toyo Boseki Kabushiki Kaisha, Ohtsu-shi, Shiga 520-0292 (JP); KITAGAWA, Yoshiyuki, Toyo Boseki Kabushiki Kaisha, Ohtsu-shi, Shiga 520-0292 (JP)
(74) Representative: Müller-Boré & Partner Patentanwälte
(86) International application number: PCT/JP2003/006962
(87) International publication number: WO 2003/103801

(57) **Abstract**

It is intended to provide an electret filter which has a large surface charge density, sustains stable electret properties over a long time even in a high-temperature atmosphere and yet degrades to reduce its volume when buried for disposal; and a process for producing the same. The molar ratio of an L-lactic acid monomer to a D-lactic acid monomer ranges from 100 to 85 : 0 to 15 or 0 to 15 : 85 to 100. An electret filter having a surface charge density of 1.2×10⁻⁹ C/cm² or more can be obtained by crystallizing by heating at a temperature from the glass transition temperature to the melting point and then, while heating to 60 to 140°C, applying a direct current corona electrical field to thereby cool to 40°C or lower under.

## Description

### TECHNICAL FIELD

The invention relates to electret filter media having both biodegradability and good electret properties at the same time and to a process for producing the same. Specifically, the invention relates to electret filter media that are mainly composed of a biodegradable lactic acid polymer, are for use in capture of fine particles in a gas, have large surface charge density and thus high collection efficiency, and can have high particle-collection efficiency initially and even after exposed to a high temperature atmosphere, and relates to a process for producing the same.

### BACKGROUND ART

Conventionally, dielectric materials having relatively long-life electrostatic charges are called "electret" and generally used for separation materials such as air filters, sanitary materials such as a mask, and electronic materials such as microphone materials. Nonwoven fabrics of polyolefin fibers electrically polarized by high-voltage corona treatment or the like have mainly been used for electret filter media.

However, such electret media are characterized by being almost undegradable or having very low rate of degradation in the natural environment, although they are effective in producing electrets. Thus, the products produced from such materials maintain their form over a long time period when dumped and buried, and thus problems such as environmental destruction have come to the surface. In recent years, the electret materials are often used for applications or products that are difficult to reuse or recycle, and there has been an increased demand for a reduction of loads on the environment receiving dumped electret technology products.

In addition, the conventional nonwoven fabrics of polyolefin fibers still have insufficient electret performance. For example, Japanese Patent Application Publication (JP-B) No. 04-42812 (Patent Document 1) and Japanese Patent No. 2672329 (Patent Document 2) disclose electret materials having specifically defined surface charge densities. However, all the examples disclosed in these publications use melt-blown nonwoven fabrics of polypropylene fibers, whose surface charge densities remain at up to 1.2x10⁻⁹/cm².

For the purpose of solving the above problems, investigations have been made on electrets using a material degradable by the metabolism or hydrolysis action of enzymes or microorganisms. For example, Japanese Patent Application Laid-Open (JP-A) No. 09-110968 (Patent Document 3) discloses a macromolecular electret material comprising a lactic acid polymer. In the document, however, neither the technique for high performance nor the charge stability over time is taken into account.

JP-A No. 2001-146672 (Patent Document 4) discloses a charged nonwoven fabric produced by applying a high voltage to a nonwoven fabric of lactic acid polymer fibers at an atmospheric temperature of 50 to 130°C for about 5 to 30 seconds. However, this publication only discloses the stability of the electrostatic force during high-temperature use and is silent on improvement in surface charge density or improvement in collection efficiency. According to the inventors' finding, only the application of high voltage at the above atmospheric temperature is insufficient for an increase in surface charge density.

### Problems to be Solved by the Invention

The invention has been made in view of the above problems and is to provide an electret filter medium that has a large surface charge density and thus a high collection efficiency, has stable electret properties during use over a long time period even after exposed to harsh environments such as a high-temperature atmosphere, and is biodegradable, and to provide a process for producing such an electret filter medium.

### DISCLOSURE OF THE INVENTION

### Means for Solving the Problems

For the purpose of solving the above problems, an electret filter medium having the structure below is provided according to the invention.

An electret filter medium comprising a lactic acid polymer having a molar ratio of an L-lactic acid monomer to a D-lactic acid monomer in the range from 100 to 85 : 0 to 15 or from 0 to 15 : 85 to 100.

Specifically, the electret filter medium comprises at least one of:
(1) a structure obtained by random co-polymerization of L-lactic acid monomer, D-lactic acid monomer, and poly(L-lactic acid) (homopolymer) characterized by being produced by polymerization of an L-lactic acid monomer,
(2) poly(DL-lactic acid) characterized by having a random copolymer structure comprising at least 85% by mole of an L-lactic acid monomer and at most 15% by mole of a D-lactic acid monomer,
(3) poly(DL-lactic acid) characterized by having a random copolymer structure comprising at least 85% by mole of a D-lactic acid monomer and at most 15% by mole of an L-lactic acid monomer, and
(4) poly(D-lactic acid) (homopolymer) characterized by being produced by polymerization of a D-lactic acid monomer.

According to the invention, the lactic acid polymer may be characterized by producing an endotherm of at least 0.5 J/g accompanied with crystal fusion.

The lactic acid polymer for use in the electret filter media of the invention may be characterized by containing at most 15% of a low molecular weight component such as lactic acid and lactide.

The invention may be directed to an electret filter medium comprising fibers mainly composed of a lactic acid polymer and having a surface charge density of at least 1.2x10⁻⁹/cm².

The invention may also be directed to an electret filter medium comprising fibers mainly composed of a lactic acid polymer, wherein 0.01 to 0.3 parts by weight of a nucleating agent is blended with 100 parts by weight of the lactic acid polymer.

The invention is also directed to a process for producing an electret filter medium, comprising: applying a direct current corona electric field to a nonwoven fabric while heating it to a temperature of 60°C to 140°C, wherein the nonwoven fabric comprises fibers mainly composed of a lactic acid polymer; and then cooling it to a temperature of 40°C or lower while applying the electric field to it.

### Embodiments of the Invention

The lactic acid polymer for use in the electret filter media of the invention comprises: poly(L-lactic acid) having a molecular structure consisting of an L-lactic acid unit alone; poly(DL-lactic acid) comprising an L-lactic acid unit and a D-lactic acid unit in a specific ratio; or poly(D-lactic acid) consisting of a D-lactic acid unit alone.

The poly(DL-lactic acid) preferably comprises at least 85% by mole of, more preferably at least 90% by mole of, most preferably at least 95% by mole of L-lactic acid or D-lactic acid.

The lactic acid polymer having the composition as stated above is capable of having crystallinity and has a glass transition temperature of room temperature or higher so that it can form an electret filter medium having excellent charge stability.

For improvement in charge stability during temperature rise, the electret filter medium produced by a DSC (Differential Scanning Calorimetry) method preferably has a heat of crystal fusion of at least 0.5 J/g, more preferably of at least 1 J/g, most preferably of 5 J/g.

The lactic acid polymer for use in the invention may be produced by a method of direct condensation polymerization the starting material of L-lactic acid, D-lactic acid or a mixture of D-lactic acid and L-lactic acid or by a method including the steps of synthesizing a cyclic dimer of lactic acid and subsequently performing ring-opening polymerization of it. The lactic acid dimer for use in the ring-opening polymerization method may be any combination of L-lactide, D-lactide, DL-lactide, and meso-lactide.

The composition ratio of D-lactic acid and L-lactic acid in the poly(DL-lactic acid) may be determined through measurement of the 1H or 13C nuclear magnetic resonance spectrum of a solution of the poly(DL-lactic acid) in a deuterated chloroform solvent or the like. This method may be combined with measurement of optical rotation or DSC measurement to determine whether the polymer is a random or block copolymer compound of D-lactic acid and L-lactic acid or a mixture of D- and L-homopolymers. If the resin components are substantially homogeneous, the composition ratio may be determined by measurement of optical rotation in a solution state with the aid of the optical activity of the polymerized lactic acid unit.

The number average molecular weight of the lactic acid polymer for use in the invention is preferably at least 5,000, more preferably at least 10,000, most preferably at least 50,000, in terms of charge stability, formability or workability, and mechanical strength. If the number average molecular weight is low, the lactic acid polymer (even having the preferred composition) can have a low melting point and a low glass transition temperature so that a cause of a reduction in charge stability can be produced.

The number average molecular weight may have any upper limit, and any preferred number average molecular weight may be selected depending on the forming or working process. The melt viscosity at a single temperature increases with the number average molecular weight. Thus, if the number average molecular weight is too high, the forming or working can be difficult. A melt temperature-raising method may be used to reduce the melt viscosity. However, such a method can cause a reduction in molecular weight by thermal decomposition and cause an increase of low molecular-weight components so that a cause of a reduction in charge stability can be produced.

The number average molecular weight of the lactic acid polymer for use in the invention may be a number average molecular weight determined in terms of polystyrene equivalent by a GPC(Gel Permeation Chromatography) column method.

Low molecular-weight components such as a lactic acid monomer and lactide in the resin should preferably be reduced for the purpose of suppressing charge decay at temperature rise and at moisture rise. Specifically, the content of such low molecular-weight components are preferably at most 15%, more preferably at most 10%, most preferably at most 5%. Any method capable of achieving this purpose may be used, and specifically the remaining low molecular-weight components may be reduced using a recrystallization method, a heat distillation method, a reduced-pressure distillation method, or the like so that the thermal decomposition can be suppressed during the working process and that in view of charge stability, the charge decay can be suppressed, which would otherwise be caused by temperature rise or moisture absorption.

The lactic acid monomer and the lactide may be quantified by a method of measuring the 1H nuclear magnetic resonance spectrum of a deuterated chloroform solvent solution. In the quantification method, the mix ratio may be determined by making a comparison between the intensity of absorption of a certain known structure belonging to lactic acid copolymers and the intensity of the absorption belonging to lactide or lactic acid.

The carboxyl group at the molecular chain end of the lactic acid polymer may be esterified with a compound having a hydroxyl group. Examples of such a hydroxyl compound include higher alcohols having at least six carbon atoms, such as octyl alcohol, lauryl alcohol and stearyl alcohol, and glycols such as ethylene glycol, diethylene glycol and 1,4-butanediol.

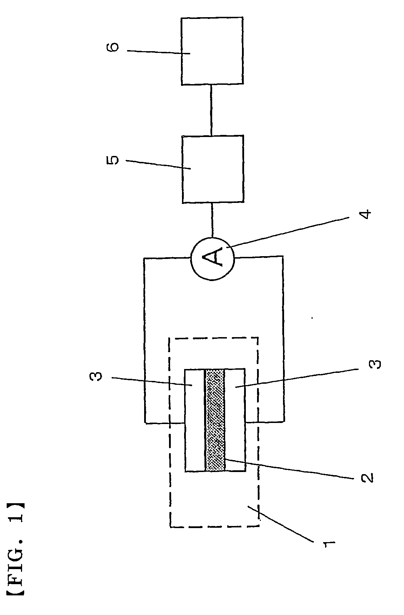

The electret filter medium of the invention preferably has a surface charge density of at least 1.2x10⁻⁹/cm², more preferably of at least 1.5x10⁻⁹/cm², most preferably of at least 2.0x10⁻⁹/cm², wherein the surface charge density is determined by measurement of thermally stimulated depolarization current. An electret filter medium with a larger surface charge density can have higher particle-collection efficiency. The thermally stimulated depolarization current may be measured with the apparatus as shown in Fig. 1. Specifically, an electret filter medium sample 3 is sandwiched between measuring electrodes 2 in a heating bath 1 capable of controlling the temperature, and the depolarization current from the electret filter medium is measured with a high-sensitivity ammeter 4 while the temperature of the heating bath is raised at a constant rate. The measured current is recorded by a recorder 6 through a data-processing system 5. The amount of the depolarization charge in a specific temperature range is calculated from the integral of a current curve plotted against temperature. The quotient obtained by dividing the calculated amount by the area of the measured sample is a surface charge density. This method is substantially the same as the method disclosed in JP-B No. 04-42812 or Japanese Patent No. 2672329.

It is important that the electret filter media of the invention should contain 0.01 to 0.3 parts by weight of a nucleating agent based on 100 parts by weight of the lactic acid polymer. The nucleating agent is effective in producing microcrystals in the process of crystallizing the crystalline macromolecular compound and effective in increasing the crystallization speed. Various inorganic or organic compounds may be used as the nucleating agent, while an organic phosphate compound or a metal carboxylate compound is preferably used. Examples thereof include sodium 2,2-methylenebis(4,6-di-tert-butylphenyl)phosphate, sodium bis(4-tert-butylphenyl)phosphate, aluminum para-tert-butylbenzoate, dehydroabietic acid, and a magnesium, sodium or potassium salt of dihydroabietic acid.

It is still unclear how the nucleating agent acts on the improvement in the electret properties of the lactic acid polymer in the invention. It is believed that in an electret of lactic acid polymer, the charge injected from the charging electrode and the dipole oriented by the electric field should mainly exist in an amorphous phase and an interface between the crystalline and amorphous phases, and that such a state should be the true nature of the electret charge. If the polymer is heated to near glass transition point, the charge in the amorphous phase should almost be lost through molecular motion, while the charge at the interface between the crystalline and amorphous phases should be relatively stable. It is believed that the nucleating agent should be effective in increasing the quantity of stable interfaces between the crystalline and amorphous phases, and effective in reducing the quantity of unstable amorphous phase.

In the invention, the amount of the nucleating agent to be blended should be from 0.01 to 0.3 parts by weight based on 100 parts by weight of the lactic acid polymer. If the amount to be blended is less than that, the charge-stabilizing effect at high temperature can be insufficient. Too much amount of the nucleating agent is not preferred, because the charge-stabilizing effect would be saturated at a certain level while the spinnability can become worse and any other influence can be produced.

In the invention, the nucleating agent may be added to the lactic acid polymer by a method including the steps of adding a given amount of the nucleating agent to a powder or pellets of the lactic acid polymer resin, uniformly dispersing it by means of a blender, a Henschel mixer or the like, and then melting and kneading the resin in an extruder, a kneader or the like.

The electret filter media according to the invention may be produced by corona treatment of a nonwoven fabric, a woven fabric or a film placed on a ground plate covered with a solid dielectric sheet, wherein the nonwoven fabric, the woven fabric or the film comprises fibers mainly composed of the lactic acid polymer. The corona treatment may be performed at room temperature but preferably include the steps of applying a direct current corona electric field while heating to 60 to 140°C and then cooling to 40°C or lower while applying the electric field, so that the electric polarization can be greater than that in the case of the room temperature treatment. It is generally said that a mechanism for electret production includes orientation of the dipole, injection of the charge and the like. The lactic acid polymer has a polar group such as an ester group. Therefore, if the corona treatment includes the steps of: performing direct current corona treatment at a temperature of about 60 to 140°C which is not lower than its glass transition point and not higher than its melting point; and then cooling to a temperature of 40°C or lower which is lower than the glass transition temperature, the orientation of the dipole can be frozen concurrently with the injection of the charge by the corona treatment so that a very large surface charge density can be obtained.

In contrast, if the lactic acid polymer is subjected to corona treatment at near room temperature lower than its glass transition point, the degree of the orientation of the dipole cannot be high, and if the application of the high electric field is stopped when the temperature is still higher than 40°C, the oriented dipole cannot be frozen. None of these methods can produce large surface charge density. If a polar group-free material such as polypropylene is subjected to the corona treatment according to the method of the invention, the resulting surface charge density would be substantially the same as that in the case of the room temperature corona treatment because of no dipole to be oriented.

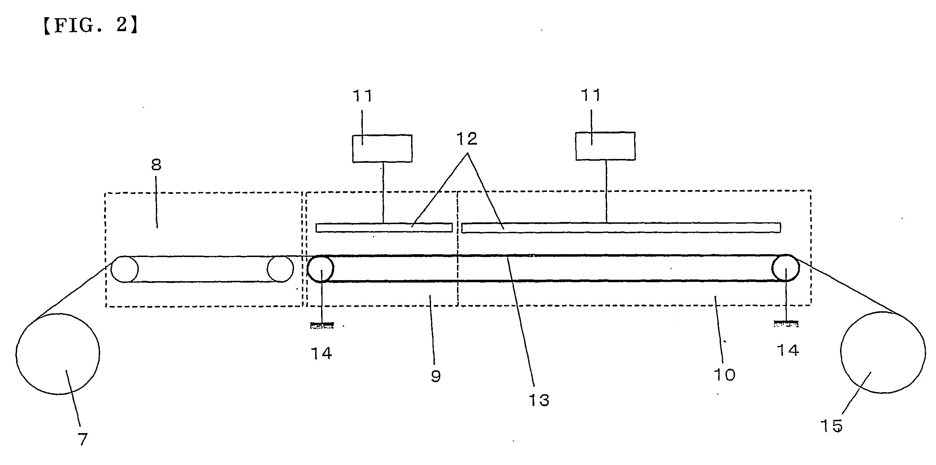

For example, the charging treatment apparatus as schematically shown in Fig. 2 may be used to produce the electret filter media according to the invention. In a preheating zone, first, the material to be electrically charged is heated to the temperature of a heating and charging zone. In the heating and charging zone, a direct current corona electric field is applied to the material while the material is kept at a constant temperature of 60 to 140°C. The holding time for which the material is held in the heating and charging zone is preferably from 5 to 20 seconds. If it is shorter than that, the charging effect can be insufficient. On the other hand, a time period longer than that cannot change the effect. In a cooling and charging zone, thereafter, the material is cooled to a temperature of 40°C or lower while the high electric field is applied. The holding time in the cooling and charging zone is not particularly restricted. The heating and charging zone and the cooling and charging zone each have a ground conveyer around which a dielectric sheet is wrapped. A needle-shaped electrode is placed above the conveyer, and a direct current high voltage is applied to the electrode when the charging treatment is performed.

In the above producing method, the electric field strength during heating may be the same as or different from that during cooling. In the latter case, the electric field strength during cooling is preferably higher than that during heating. This is because an electric field having a higher intensity than that for orientation should preferably be applied in order to surely freeze the dipole oriented by heating and charging, and because during heating the dielectric sheet for the ground conveyer has an increased electric conductivity so that if the electric field strength was too high, spark discharge would frequently occur. For example, a preferred range of the electric field strength is from 12 to 20 kV/cm during heating and from 15 to 20 kV/cm during cooling. If the electric field strength is lower than that, the charging effect can be insufficient. On the other hand, a strength higher than that can frequently cause spark discharge and thus is not preferred.

As stated above, it is assumed that the true nature of the charge in the electret of the lactic acid polymer should be the charge injected from the electrode and the dipole oriented by the electric field. It is believed that the orientation of the dipole can very easily occur in the state heated to 60 to 140°C although it can occur to some extent when the direct current corona electric field is applied at room temperature. It is also assumed that if cooling to 40°C or lower is subsequently performed while the electric field is applied, the orientation can be frozen, and the electric polarization can be maintained, so that a very large surface charge density can be produced.

It is expected that if a nucleating agent is added, polypropylene, which is conventionally used as an electret material, would have an increased amount of stable interfaces between crystalline and amorphous phase and a decreased amount of unstable amorphous phase. However, the polypropylene has almost no polar group to be oriented, and thus even if the charging treatment is performed according to the above method, the resulting surface charge density should be almost the same as that in the case of the room temperature charging treatment.

The electret filter media of the invention may be used in a preferred form as needed. Specific examples of such a preferred form include an extrusion molded film, a sheet, fibers, a nonwoven fabric, a woven fabric or a cloth, a knit or a knitted fabric, and a complex of any of the above products with any other material.

The film is preferably formed using a conventionally known film-forming method such as a solvent casting method, a melt extrusion method, and a heat press method. After the film is formed by such the methods, if desired, uniaxial or biaxial drawing and heat setting are preferably performed. If drawing orientation and crystallization treatment are performed, the charge stability against moisture and temperature can be increased even in the same composition. The thickness of the film should be from 1 to 50 µm. In the lower range, the thickness of the film is preferably from 1.5 to 10 µm. If the thickness is more than 50 µm, the electret forming effect can be saturated.

Any known spinning method such as a melt extrusion method and a dry or wet type solvent spinning method may preferably be used to form the fibers. After the fibers are formed by such the methods, if desired, drawing treatment and heat setting are preferably performed. If drawing orientation and crystallization treatment are performed, the charge stability can further be increased. It is also preferred that a uniaxially oriented film is divided into fibrillated film yarns or film split yarns as conventionally known.

When the nonwoven fabric is formed and used, the fibers produced by the above method are cut into an appropriate length and then subjected to a dry type web-forming method in a carding machine, a method including the steps of dispersing them in air current and collecting them, or a method including the steps of dispersing them in a liquid and making paper from them. A direct forming method may also be used a melt extrusion method such as a melt blown method and a spunbond method, and a solution extrusion method such as a flush spinning method. The fibers for use in the nonwoven fabric preferably have a fiber diameter of 0.1 to 40 µm. If the diameter is 0.1 µm or less, the pressure drop can be too high so that a problem can tend to occur in practical use. A thickness of 40 µm or more is not preferred, because such a thickness can cause a reduction in filtration performance and can provide saturation of the electret effect. In particular, the thickness is preferably from 1 to 30 µm. The basis weight of the nonwoven fabric is preferably from 5 g/m² to 100 g/m², particularly preferably from 10 g/m² to 50 g/m², in terms of efficient electret production.

If desired, the nonwoven fabric sheet may be subjected to mechanical intermingling with a needle punch, a water jet or the like, stitching with other fibers, or heat fusion of the component fibers or an additional binder resin by heat embossing or in an air through oven. Application or spray of an adhesive or impregnation with an adhesive is also preferred. Such a process can improve the strength, the shape holding ability or the like.

If desired, an antioxidant, an ultraviolet absorbent, a heat stabilizer, or the like is preferably added to inhibit resin degradation during processing and use.

The electret filter media produced as described above according to the invention can be more resistant to the influence of temperature or moisture than the conventionally known degradable electret filter media and can be superior in practical applications.

### BRIEF DESCRIPTION OF DRAWINGS

Fig. 1 is a schematic diagram showing an apparatus for measuring thermally stimulated depolarization current; and
Fig. 2 is a schematic diagram showing an apparatus for charging treatment for use in producing of the electret filter media of the invention.

In the drawings, reference numeral 1 represents a temperature-controllable heating bath, 2 a measuring electrode, 3 an electret filter medium sample, 4 a high-sensitivity ammeter, 5 a data-processing system, 6 a recorder, 7 a nonwoven fabric, 8 a preheating zone, 9 a heating and charging zone, 10 a cooling and charging zone, 11 a direct current high voltage power source, 12 a corona needle electrode, 13 a ground conveyer wrapped with a dielectric sheet, 14 a ground wire, and 15 an electret filter medium, respectively.

### BEST MODE FOR CARRYING OUT THE INVENTION

While the invention is described with reference to the examples below, the invention can be carried out in various manners as stated above, and the examples below are not intended to limit the scope of the invention.

### (Preparation of Lactic acid polymers)

### (Preparation Examples 1 to 8)

L-lactide and/or D-lactide were used as a polymerization material and used at different addition percentages as shown in Table 1 for Preparation Examples 1 to 7. In a reaction vessel, the material or materials were mixed with, as polymerization catalysts, tin octanoate and lauryl alcohol. After the air in the vessel was replaced with nitrogen, the mixture was heated under reduced pressure at 130°C for 4 hours so that ring-opening polymerization was carried out. Purification was performed by a recrystallization method including the steps of dissolving the reaction product in chloroform and diluting the chloroform solution with hexane. Physical property values of each resulting resin are shown in Table 1. The reaction product of Preparation Example 1 before the recrystallization was harvested and used as Preparation Example 8.

### [Measurement of Number Average Molecular Weight]

The number average molecular weight of each of the poly(lactic acid) polymers of Preparation Examples 1 to 8 was determined in terms of polystyrene equivalent by a GPC column method.

### [Measurement of Crystal Melting Point and Glass Transition Temperature]

The lactic acid polymers of Preparation Examples 1 to 8 were measured for crystal melting point and glass transition temperature by the DSC method at a rate of temperature rising of 10°C/min.

A melt blown nonwoven fabric was produced from each resulting lactic acid polymer. An electret filter medium was prepared with the nonwoven fabric by each of two charging treatment methods and then measured for filtration performance.

### [Measurement of Heat of Crystal fusion]

The melt blown nonwoven fabric was measured for heat of crystal fusion by the DSC method at a rate of temperature rising of 10°C/min.

### [Charging Treatment 1 (Corona Charging at Room Temperature)]

The melt blown nonwoven fabric was subjected to corona charging treatment at +20 kV/cm for 10 seconds with a needle electrode so that an electret filter medium sample was prepared.

### [Charging Treatment 2 (Heating and Corona Charging)]

The melt blown nonwoven fabric was subjected to charging treatment in the apparatus shown in Fig. 2 to obtain an electret filter medium sample. In the heating and charging zone, the electric field strength was +15 kV/cm, and the holding time was 7 seconds; In the cooling and charging zone, the electric field strength was + 19 kV/cm, and the holding time was 40 seconds.

### [Evaluation of Filtration Properties]

The electret filter medium sample was placed in a duct, and air was filtered at a controlled rate of 5 cm/second, when a difference between the static pressures upstream and downstream from the electret filter medium was measured with pressure gauges as a pressure drop. The particle-collection efficiency (%) was evaluated at 5 cm/second with NaCl particles 0.3 µm in diameter. First, the particle-collection efficiency immediately after the charging treatment (E0) was measured, and then the particle-collection efficiency after a performance-degrading treatment (E1) was measured. The performance retention rate was calculated according to Formula 1. The performance-degrading treatment was carried out under either the conditions of 25°C x 50RH% x one month storage or the conditions of 80°C x 24 hours storage.

### [Measurement of Surface Charge Density]

Fig. 1 is a schematic diagram showing an apparatus for measuring thermally stimulated depolarization current. A 20 mmø electret filter medium sample was placed between the measuring electrodes, and the measurement was performed at a rate of temperature rising of 4°C/minute in the temperature range from 30°C to 170°C. The amount of depolarized charge in the range from 30 to 170°C was calculated from the resulting depolarization current curve and then divided by the area of the sample (20 mmø). The resulting quotient was defined as the surface charge density of the sample.

### Example 1

In a melt blown method, the resin of Preparation Example 1 was used to prepare a nonwoven fabric with an basis weight of 41 g/m² and an average fiber diameter of 2.3 µm. The resulting nonwoven fabric was then subjected to the method of Charging Treatment 1 so that an electret filter medium sample (Example 1) was prepared. The sample was measured for surface charge density, filtration properties and heat of crystal fusion. The filtration properties were measured immediately after the charging treatment and after the sample was stored at 25°C and 50RH% for a month. The result is shown in Table 2.

### Example 2

In a melt blown method, the resin of Preparation Example 2 was used to prepare a nonwoven fabric with an basis weight of 39 g/m² and an average fiber diameter of 2.3 µm. The nonwoven fabric was then subjected to the method of Charging Treatment 1 so that an electret filter medium sample (Example 2) was prepared. The same evaluation as in Example 1 was performed. The result is shown in Table 2.

### Example 3

In a melt blown method, the resin of Preparation Example 6 was used to prepare a nonwoven fabric with an basis weight of 40 g/m² and an average fiber diameter of 2.4 µm. The nonwoven fabric was then subjected to the method of Charging Treatment 1 so that an electret filter medium sample (Example 3) was prepared. The same evaluation as in Example 1 was performed. The result is shown in Table 2.

### Example 4

In a melt blown method, the resin of Preparation Example 7 was used to prepare a nonwoven fabric with an basis weight of 40 g/m² and an average fiber diameter of 2.5 µm. The nonwoven fabric was then subjected to the method of Charging Treatment 1 so that an electret filter medium sample (Example 4) was prepared. The same evaluation as in Example 1 was performed. The result is shown in Table 2.

### Comparative Example 1

In a melt blown method, the resin of Preparation Example 3 was used to prepare a nonwoven fabric with an basis weight of 40 g/m² and an average fiber diameter of 2.5 µm. The nonwoven fabric was then subjected to the method of Charging Treatment 1 so that an electret filter medium sample (Comparative Example 1) was prepared. The same evaluation as in Example 1 was performed. The result is shown in Table 2.

### Comparative Example 2

In a melt blown method, the resin of Preparation Example 4 was used to prepare a nonwoven fabric with an basis weight of 40 g/m² and an average fiber diameter of 2.4 µm. The nonwoven fabric was then subjected to the method of Charging Treatment 1 so that an electret filter medium sample (Comparative Example 2) was prepared. The same evaluation as in Example 1 was performed. The result is shown in Table 2.

### Comparative Example 3

In a melt blown method, the resin of Preparation Example 5 was used to prepare a nonwoven fabric with an basis weight of 40 g/m² and an average fiber diameter of 2.4 µm. The nonwoven fabric was then subjected to the method of Charging Treatment 1 so that an electret filter medium sample (Comparative Example 3) was prepared. The same evaluation as in Example 1 was performed. The result is shown in Table 2.

### Comparative Example 4

In a melt blown method, the resin of Preparation Example 8 was used to prepare a nonwoven fabric with an basis weight of 40 g/m² and an average fiber diameter of 2.4 µm. The nonwoven fabric was then subjected to the method of Charging Treatment 1 so that an electret filter medium sample (Comparative Example 4) was prepared. The same evaluation as in Example 1 was performed. The result is shown in Table 2.

The results of Examples 1 to 4 and Comparative Examples 1 to 3 indicate that in storage at room temperature, Examples 1 to 4 with crystallinity provide better stability over time than amorphous Comparative Examples 1 to 3. It is apparent that Examples 1 to 4 each with a relatively high content of L- or D-lactic acid tend to have good charge retention properties. From the result of Comparative Example 4, it is also apparent that a relatively high content of lactide can lead to poor stability over time.

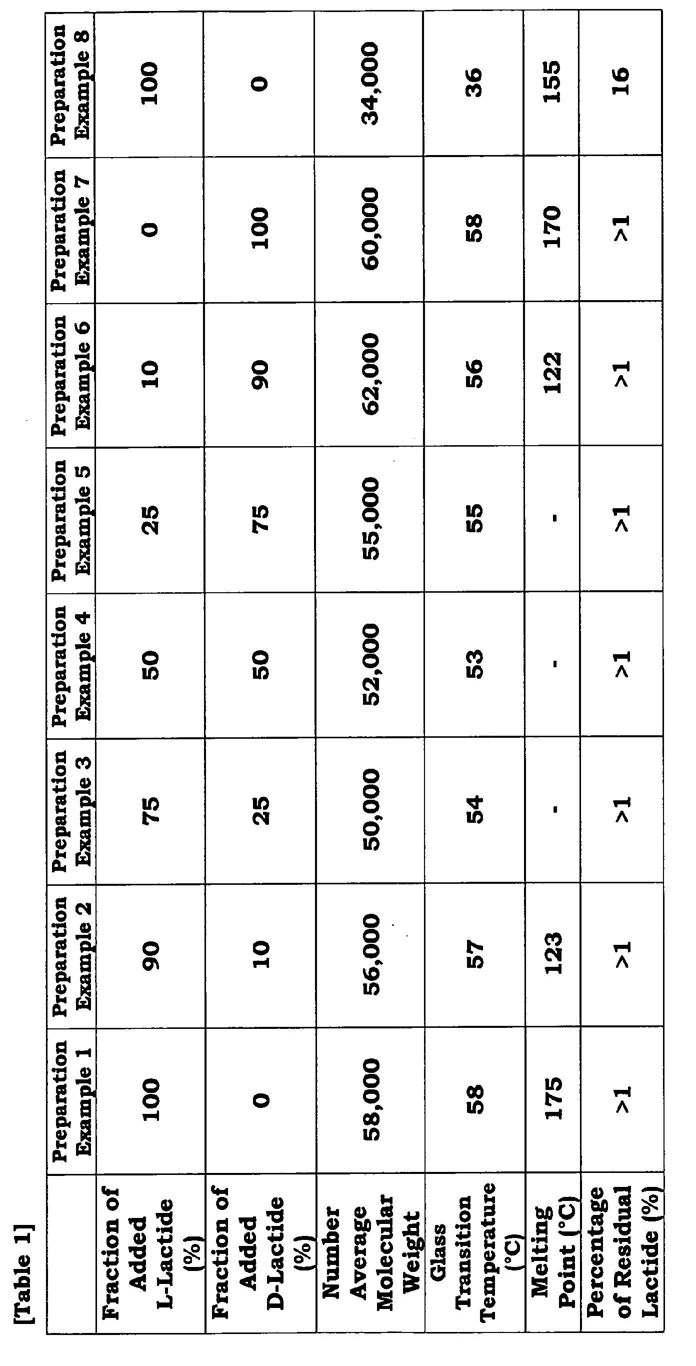

**[Table 2]**

| | Surface Charge Density (C/cm²) | Pressure Drop (mmAq) | Particle-Collection Efficiency Immediately After Charging Treatment (%) | Particle-Collection Efficiency After Storage at 25°C and 50RH% for a Month (%) | Performance Retention (%) | Heat of Crystal fusion (J/g) |
|---|---|---|---|---|---|---|
| Example 1 | 0.9×10⁻⁹ | 6.9 | 99.98 | 99.93 | 85.3 | 26 |
| Example 2 | 0.9×10⁻⁹ | 6.8 | 99.98 | 99.82 | 74.2 | 10 |
| Example 3 | 0.9×10⁻⁹ | 6.6 | 99.96 | 99.72 | 78.2 | 8 |
| Example 4 | 0.9×10⁻⁹ | 6.5 | 99.96 | 99.91 | 89.6 | 30 |
| Comparative Example 1 | 0.9×10⁻⁹ | 6.5 | 99.95 | 98.12 | 52.2 | 0 |
| Comparative Example 2 | 0.9×10⁻⁹ | 6.7 | 99.97 | 96.85 | 42.6 | 0 |
| Comparative Example 3 | 0.9×10⁻⁹ | 6.8 | 99.98 | 97.88 | 45.2 | 0 |
| Comparative Example 4 | 0.9×10⁻⁹ | 6.7 | 99.95 | 98.46 | 54.9 | 12 |

### Example 5

The melt blown nonwoven fabric as used in Example 1 was subjected to the method of Charging Treatment 2 (heating and charging at 90°C and cooling to 35°C under applied electric field) so that an electret filter medium sample (Example 5) was obtained. Table 3 shows its surface charge density, its filtration properties immediately after the charging treatment and its heat of crystal fusion.

### Example 6

The melt blown nonwoven fabric as used in Example 1 was subjected to the method of Charging Treatment 2 (heating and charging at 130°C and cooling to 35°C under applied electric field) so that an electret filter medium sample (Example 6) was obtained. The same evaluation as in Example 5 was performed. The result is shown in Table 3.

### Reference Example 1

The melt blown nonwoven fabric as used in Example 1 was subjected to the method of Charging Treatment 2 (heating and charging at 90°C and cooling to 70°C under applied electric field) so that an electret filter medium sample (Example 6) was obtained. The same evaluation as in Example 5 was performed. The result is shown in Table 3.

### Comparative Example 5

A melt blown polypropylene nonwoven fabric with an average fiber diameter of 2.3 µm and an basis weight of 40 g/m² was subjected to the method of Charging Treatment 2 (heating and charging at 90°C and cooling to 35°C under applied electric field). The same evaluation as in Example 5 was performed. The result is shown in Table 3.

**[Table 3]**

| | Surface Charge Density (C/cm²) | Pressure Drop (mmAq) | Particle-Collection Efficiency Immediately After Charging Treatment (%) | Heat of Crystal fusion [J/g] |
|---|---|---|---|---|
| Example 5 | 1.9×10⁻⁹ | 6.9 | 99.9991 | 28 |
| Example 6 | 2.3×10⁻⁹ | 6.9 | 99.9998 | 30 |
| Reference Example 1 | 0.6×10⁻⁹ | 6.9 | 99.90 | 28 |
| Comparative Example 5 | 0.7×10⁻⁹ | 6.9 | 99.94 | - |

The above results indicate that the electret filter medium sample of each example (prepared by the process including the steps of applying direct current corona electric field to the melt blown nonwoven fabric of lactic acid polymer while heating it and then cooling it under the applied electric field) has a larger surface charge density and a higher collection efficiency than those of the reference example and the comparative example.

### Example 7

One hundred parts by weight of the resin of Preparation Example 1 was mixed with 0.05 parts by weight of sodium 2,2-methylenebis(4,6-di-tert-butylphenyl)phosphate (NA-11 (trade name) manufactured by ASAHI DENKA Co., Ltd.). The resulting resin was used to prepare a melt-blown nonwoven poly(lactic acid) fabric with an average fiber diameter of 2.3 µm and an basis weight of 40 g/m². The nonwoven fabric was subjected to the method of Charging Treatment 2 (heating and charging at 90°C and cooling to 35°C under applied electric field) so that an electret filter medium sample (Example 7) was obtained. Table 4 shows its surface charge density, its filtration properties and its heat of crystal fusion. The filtration properties were measured immediately after the charging treatment and after it was stored at 80°C for 24 hours.

### Example 8

One hundred parts by weight of the resin of Preparation Example 1 was mixed with 0.1 parts by weight of aluminum para-tert-butylbenzoate (AL-PTBBA (trade name) manufactured by Shell Chemicals Japan Ltd.). The resulting resin was used to prepare a melt-blown nonwoven poly(lactic acid) fabric with an average fiber diameter of 2.3 µm and an basis weight of 40 g/m². The nonwoven fabric was subjected to the method of Charging Treatment 2 (heating and charging at 90°C and cooling to 35°C under applied electric field) so that an electret filter medium sample (Example 8) was obtained. The same evaluation as in Example 7 was performed. The result is shown in Table 4.

### Example 9

One hundred parts by weight of the resin of Preparation Example 1 was mixed with 0.1 parts by weight of a partial metal salt of dehydroabietic acid (KM-1500 (trade name) manufactured by Arakawa Chemical Industries, Ltd.). The resulting resin was used to prepare a melt-blown nonwoven poly(lactic acid) fabric with an average fiber diameter of 2.3 µm and an basis weight of 40 g/m². The nonwoven fabric was subjected to the method of Charging Treatment 2 (heating and charging at 90°C and cooling to 35°C under applied electric field) so that an electret filter medium sample (Example 9) was obtained. The same evaluation as in Example 7 was performed. The result is shown in Table 4.

### Reference Example 2

The electret filter medium sample of Example 5 was also evaluated for filtration properties after stored at 80°C for 24 hours. The result is shown in Table 4 as Reference Example 2.

**[Table 4]**

| | Surface Charge Density (C/cm²) | Pressure Drop (mmAq) | Particle-Collection Efficiency Immediately After Charging Treatment (%) | Particle-Collection Efficiency After Storage at 80°C for 24 hours (%) | Performance Retention (%) | Heat of Crystal fusion (J/g) |
|---|---|---|---|---|---|---|
| Example 7 | 20×10⁻⁹ | 6.9 | 99.9990 | 99.9938 | 84.1 | 33 |
| Example 8 | 2.3×10⁻⁹ | 6.9 | 99.9989 | 99.9956 | 88.1 | 30 |
| Example 9 | 1.9×10⁻⁹ | 6.9 | 99.9991 | 99.9976 | 91.2 | 34 |
| Reference Example 2 | 1.9×10⁻⁹ | 6.9 | 99.9991 | 99.8665 | 38.8 | 28 |

It is apparent that the electret filter medium sample of each example, which is obtained by charging treatment of the melt blown nonwoven fabric of the nucleating agent-containing poly(lactic acid), has a large surface charge density and a high collection efficiency initially and after the treatment at 80°C. In the case of the melt blown nonwoven fabric of the nucleating agent-free poly(lactic acid) (Example 5), the initial collection efficiency is high, but after the 80°C treatment, the collection efficiency is significantly reduced.

### INDUSTRIAL APPLICABILITY

The electret filter medium of lactic acid polymer according to the invention has a large surface charge density and high particle-collection efficiency initially and even after exposed to a high-temperature atmosphere and resist to degradation over time by rising in temperature during use. Thus, such electret filter medium can be substituted for conventionally known electrets comprising a hardly degradable resin. On the other hand, such electret filter media comprise a nonwoven fabric of fibers mainly composed of lactic acid polymer so that they can exhibit their dedradability in nature upon disposition and can contribute to the reduction of loads on the environment, and therefore they are useful.

## Claims

1. An electret filter medium, comprising a lactic acid polymer having a molar ratio of an L-lactic acid monomer to a D-lactic acid monomer in the range from 100 to 85 : 0 to 15 or from 0 to 15 : 85 to 100.

2. The electret filter medium according to Claim 1, wherein it is mainly composed of a lactic acid polymer that produces an endotherm of at least 0.5 J/g accompanied with crystal fusion.

3. The electret filter medium according to any one of Claims 1 and 2, wherein the content of lactide is at most 15%.

4. The electret filter medium according to any one of Claims 1 to 3, wherein it has a surface charge density of at least 1.2x10⁻⁹/cm².

5. The electret filter medium according to any one of Claims 1 to 4, wherein 0.01 to 0.3 parts by weight of a nucleating agent is blended based on 100 parts by weight of the lactic acid polymer.

6. A process for producing the electret filter medium according to any one of Claims 1 to 5, comprising: applying a direct current corona electric field to a nonwoven fabric while heating it to a temperature of 60°C to 140°C, wherein the nonwoven fabric comprises fibers mainly composed of a lactic acid polymer; and then cooling it to a temperature of 40°C or lower while applying the electric field to it.
